# EUROPÄISCHE PATENTSCHRIFT

(11) **EP 3 569 916 B1**
(45) Veröffentlichungstag und Bekanntmachung des Hinweises auf die Patenterteilung: **22.02.2023**
(21) Anmeldenummer: 19184309.3
(22) Anmeldetag: 11.04.2017
(51) Int. Cl.: F16L 59/16, F16L 59/18

(54) **HALTEVORRICHTUNG ZUM BEFESTIGEN EINER ISOLIERUNG**
HOLDING DEVICE FOR FIXING AN INSULATION
DISPOSITIF DE MAINTIEN PERMETTANT DE FIXER UNE ISOLATION

(30) Priorität: 25.04.2016 DE 102016107637; 10.05.2016 DE 202016002955 U; 10.05.2016 DE 202016002956 U
(43) Veröffentlichungstag der Anmeldung: 20.11.2019
(62) Teilanmeldung aus: 17000616.7
(73) Patentinhaber: tmax Holding GmbH, 68169 Mannheim (DE)
(72) Erfinder: Gugau, Bernd, 69121 Heidelberg (DE); Cappellucci, Peter, 68199 Mannheim (DE)
(74) Vertreter: Wesch, Arno

(56) Entgegenhaltungen:
- EP-A1- 2 148 124
- EP-A1- 2 241 766
- JP-U- S6 038 992
- US-A1- 2007 209 166

## Beschreibung

Die Erfindung betrifft eine Haltevorrichtung zum Befestigen einer Isolierung an einer V-Band-Schelle oder an einer anderen Verbindungsvorrichtung für zu verbindende Rohrenden gemäß dem Oberbegriff des Patentanspruchs 1.

Aus der EP 2 148 124 A1 ist eine solche Haltevorrichtung mit einem sehr kurzen Zugkörper, nämlich lediglich einer Lasche, bekannt, die umgebogen werden kann, um zwei Enden eines Gürtelabschnitts zu verbinden. Die JP S60-38992 U und die US 2007/0209166 A1 zeigen vor diesem Hintergrund Schraubverbindungen, bei denen eine Mutter auf eine nicht drehbare Schraube aufgedreht werden muss, um einen Umfang der Haltevorrichtung zu verringern. Die EP 2 241 766 A1 zeigt eine Schraubverbindung, bei der eine Schraube in eine Mutter in einem Gehäuse eindrehbar ist.

Aus dem Stand der Technik ist es bereits bekannt, zwei Rohrenden einer Rohrleitung durch sogenannte V-Band-Schellen zu verbinden. Eine V-Band-Schelle weist eine V-förmige oder im Wesentlichen V-förmige längliche Aufnahme auf. Die Aufnahme wird derart gebogen, dass sie axial einander gegenüberliegende ringförmige Vorsprünge der Rohrenden umfängt und umgreift. Durch Anziehen einer Schraube wird der Umfang der V-Band-Schelle solange verringert, bis diese bzw. die längliche Aufnahme fest an den Rohrenden anliegt. Hierdurch werden die Rohrenden mechanisch, vorzugsweise fluiddicht, miteinander verbunden. Durch eine so geschaffene Rohrleitung können dann insbesondere heiße Gase oder Flüssigkeiten geführt werden.

Bei der Führung von heißen Medien durch die Rohrleitung wird die V-Band-Schelle allerdings erwärmt und kann daher in unerwünschter Weise Wärme auf umliegende Bauteile abstrahlen. Insbesondere wenn die V-Band-Schelle in der Nähe von temperaturempfindlichen Bauteilen, beispielsweise nahe bei Kunststoffbauteilen, elektronischen Reglern oder Sensoren, angeordnet ist, können diese Bauteile durch die Wärme negativ beeinträchtigt werden.

Außerdem kann es wünschenswert sein, den Verlust von Wärme zu minimieren, um den Energieerhalt in einem fluidführenden System zu optimieren. Um diesen Problemen zu begegnen, müssen V-Band-Schellen häufig mit geeigneten Isolierungen versehen werden. Solche Isolierungen bestehen in der Regel aus Isoliermatten oder aus konfektionierten flexiblen Isolierformteilen. Die Isolierungen weisen temperaturbeständige technische Gewebe und Isoliermaterialien auf oder temperaturbeständige Gewebebänder, die zur Bandagierung und Umwicklung verwendet werden.

Manche Isolierungen werden um einen zu isolierenden Körper gelegt und mit Druckknöpfen befestigt. Andere Isolierungen werden mit Haken und Spannfedern befestigt, die in die Isolierungen eingehängt sind. Diese Isolierungen sind jedoch weder steinschlagfest noch spritzwasserbeständig. Des Weiteren zeigen sie bei Ihrer Verwendung unter dynamischer Belastung nur eine geringe Vibrationsbeständigkeit und sind daher nur von geringer Dauerhaltbarkeit.

Vor diesem Hintergrund sind aus dem Brandschutz bereits Haltevorrichtungen für intumeszierende Materialien bekannt. Die DE 43 25 757 A1 zeigt eine Haltevorrichtung mit einer Schraubverbindung. Die EP 0 486 299 A1 zeigt eine Haltevorrichtung, bei welcher zur Befestigung metallische Finger umgebogen werden, nachdem diese durch Schlitze als Zugkörper durchgezogen wurden. Die aus dem Brandschutz bekannten Haltevorrichtungen sind für statische Anwendungen ausgelegt und nicht geeignet, Isolierungen an V-Band-Schellen betriebstauglich festzulegen.

Der Erfindung liegt daher die Aufgabe zugrunde, eine V-Band-Schelle oder eine andere Verbindungsvorrichtung für zu verbindende Rohrenden mit einer Isolierung zu versehen, welche nach einfacher Montage eine möglichst lange Betriebslebenszeit zeigt.

Die vorliegende Erfindung löst die Aufgabe durch die Merkmale des Patentanspruchs 1.

Erfindungsgemäß umfasst eine Haltevorrichtung zum Befestigen einer Isolierung an einer V-Band-Schelle oder an einer anderen Verbindungsvorrichtung für zu verbindende Rohrenden Verschlusselemente, wobei durch Zusammenwirken der Verschlusselemente der Außen- und/ oder Innenumfang der Haltevorrichtung verringerbar ist, und einen biegbaren Gürtelabschnitt, wobei der Gürtelabschnitt als Teil eines Außenmantels oder nach Art eines Außenmantels um eine Isolierung legbar ist. Zur Verbesserung der Dauerhaltbarkeit, der Steinschlagfestigkeit, Spritzwasserdichtigkeit, Vibrationsbeständigkeit und der Montage von Isolierungen für V-Band-Schellen wird hierdurch eine flexible Haltevorrichtung angegeben, welche den eigentlichen Isolierwerkstoff vor den genannten Umwelteinflüssen schützt und ohne großen technischen Aufwand montierbar ist. Die Isolierung umgibt die V-Band-Schelle an deren äußerem Umfang und wird durch die Haltevorrichtung gehalten. Der Gürtelabschnitt schützt die Isolierung vor äußeren Einflüssen und umfängt die Isolierung zumindest bereichsweise oder vollständig. Die Haltevorrichtung schützt so nach Art eines Außenmantels zumindest bereichsweise gegen äußere Einwirkungen, zum Beispiel gegen Steinschlag, Spritzwasser und ähnliches. Die Haltevorrichtung ermöglicht eine dauerhafte vibrationsgerechte Befestigung eines Isoliersystems auf der V-Band-Schelle.

Der Gürtelabschnitt ist mittelbar oder unmittelbar mit einer Haube zur Aufnahme eines Überstands oder Verschlusses einer V-Band-Schelle oder einer anderen Verbindungsvorrichtung für Rohrenden verbunden.

Die Haube stellt sicher, dass ein Verschluss, nämlich in der Regel eine Schraubverbindung der V-Band-Schelle, innerhalb der Haube aufnehmbar ist, wenn die Haltevorrichtung um die V-Band-Schelle nebst Isolierung gelegt wird.

Die Isolierung kann vorteilhaft in die Haube ausweichen, wenn diese durch einen Überstand oder Verschluss verdrängt wird. Durch die Haube wird weitgehend oder vollständig vermieden, dass die Haltevorrichtung in unerwünschter Weise deformiert wird und an kritischen Bereichen von einer runden Form abweicht.

Die Haube bietet des Weiteren ebenfalls Schutz vor äußeren Einflüssen. Vor diesem Hintergrund könnten der Gürtelabschnitt und die Haube einen zumindest bereichsweise geschlossenen Außenmantel zum Umfangen der Isolierung und/ oder der V-Band-Schelle in radialer und/ oder axialer Richtung bilden. Hierdurch werden die Isolierung und die V-Band-Schelle besonders gut gegen äußere Einflüsse geschützt.

Die Haltevorrichtung ist, wie eine V-Band-Schelle, durch eine Schraubverbindung dauerhaft befestigt. Durch das Anziehen einer Schraube wird der Außen- und Innenumfang der Haltevorrichtung verringert, so dass diese die Isolierung an die V-Band-Schelle in radialer Richtung andrückt. Bei dieser Montage ist allerdings zu beachten, dass die Isolierung betriebsgerecht zwischen V-Band-Schelle und Haltevorrichtung positioniert werden muss. Zugleich muss von der montierenden Person eine Schraubverbindung hergestellt und eine Schraube angezogen werden.

Bevorzugt ist die Haltevorrichtung, aber insbesondere der Zugkörper, aus einem Metall, bevorzugt aus Edelstahl, gefertigt. Metalle lassen sich leicht reversibel oder irreversibel umbiegen. Edelstahl wird aufgrund seiner Korrosionsbeständigkeit besonders bevorzugt verwendet, um eine hier beschriebene Haltevorrichtung zu fertigen. Bevorzugt ist daher die gesamte Haltevorrichtung aus Edelstahl gefertigt. Die Haltevorrichtung ist bevorzugt einteilig ausgestaltet.

Der Zugkörper und/ oder das Material, aus dem der Gürtelabschnitt und/ oder die gesamte Haltevorrichtung gefertigt ist, könnte bzw. könnten eine Dicke im Bereich 0,25 bis 1 mm aufweisen. Eine solche Dicke hat sich als vorteilhaft erwiesen, um einerseits den Zugkörper und den Gürtelabschnitt leicht umbiegen zu können und andererseits relativ leicht Stanz- oder Laserprozesse durchführen zu können, um im Gürtelabschnitt Strukturen ausbilden zu können.

Vor diesem Hintergrund könnte der Gürtelabschnitt eine Aufnahme zum Ein- oder Anlegen einer Isolierung aufweisen oder ausbilden, wobei der Gürtelabschnitt eine innere Anlagebasis aufweist, von welcher beidseitig Stützsegmente abragen, welche durch Aussparungen voneinander beabstandet sind. Die Aufnahme ist bevorzugt im Querschnitt im Wesentlichen U-förmig ausgebildet. Die Stützsegmente ragen derart von der Anlagebasis ab, dass ein Ausweichen der Isolierung in axialer Richtung erschwert oder verhindert ist. Die Anlagebasis ist bevorzugt als geschlossene Ebene ausgebildet, welche ein Ausweichen der Isolierung in radialer Richtung verhindert.

Mindestens zwei Stützsegmente könnten sich in Abragerichtung in ihrer Breite verjüngen, wobei sich eine zwischen diesen liegende Aussparung in Abragerichtung derart erweitert, dass sich die Stützsegmente beim Biegen des Gürtelabschnitts zur Verringerung des Außen- und/ oder Innenumfangs mit ihren Seitenkanten einander annähern können und sich die Aussparung dabei in ihrer Weite verringert. Hierdurch wird das Biegen des Gürtelabschnitts erleichtert. Die Stützsegmente stoßen beim Biegen vorzugsweise zunächst nicht aneinander an. Die Aussparungen begünstigen durch gezielte Materialschwächung das Biegeverhalten des Gürtelabschnitts. Die Aussparungen sind so ausgebildet, dass sich die Stützsegmente beim Biegen des Gürtelabschnitts möglichst nahe kommen und eine Abschirmung der Isolierung und der V-Band-Schelle in axialer Richtung begünstigen.

Vor diesem Hintergrund ist auch denkbar, dass sich die Stützsegmente nicht in einer Richtung verjüngen, aber die Aussparungen geeignet gewählt sind, damit sich die Stützsegmente beim Biegen des Gürtelabschnitts annähern oder sogar bereichsweise einander überlappen können.

Die Isolierung könnte zumindest an einer Stelle mit der Haltevorrichtung verbunden sein. Bevorzugt ist die Isolierung am zweiten Verschlusselement festgelegt. Hierdurch ist die Isolierung verliersicher mit der Haltevorrichtung verbunden. Die montierende Person kann die Isolierung in die Aufnahme einlegen und die Haltevorrichtung um eine V-Band-Schelle herumlegen. Die Isolierung könnte als Isolierformteil ausgebildet sein, wobei die Isolierung ein Glasfasergewebe oder ein Feindrahtgewebe aufweist.

Die beiden Verschlusselemente sind durch eine Schraubverbindung miteinander verbunden, wobei eine Schraube mit einem gewindetragenden Schraubenende in einer Schrauben-Gegenaufnahme aufgenommen ist und die Schraube zur Verringerung des Außen- und/ oder Innenumfangs der Haltevorrichtung in die Schrauben-Gegenaufnahme eindrehbar ist. Eine Schraubverbindung ist leicht wieder lösbar.

Die Schraube ist mit ihrem gewindetragenden Schraubenende in einer drehbaren Schrauben-Gegenaufnahme aufgenommen oder verschwenkbar aufgenommen und mit einem freien Ende, welches einen Schraubenkopf aufweist, in ein Einhängelager eingehängt. Hierdurch ist die Montage vereinfacht und die Schraube verliersicher an der Haltevorrichtung angebracht.

Die drehbare Schrauben-Gegenaufnahme ist dem Gürtelabschnitt zugeordnet, und das Einhängelager ist der Haube zugeordnet. So kann eine längliche Schraube in Richtung des Gürtelabschnitts abragen. Ein Überragen der Haube durch die Schraube bzw. ein störendes Abstehen der Schraube kann vermieden werden.

Die Isolierung könnte eine Laminierung aufweisen, welche der Anlagebasis abgewandt und/ oder nach radial innen angeordnet ist. Die Laminierung kann hinter ihr liegendes Isoliermaterial vor Abrieb schützen.

Die Isolierung könnte bereichsweise durch einen Klebstoff mit der Haltevorrichtung verbunden sein. Ein Klebstoff kann kostengünstig und zur raschen Fertigung eingesetzt werden.

Ein Werkzeug könnte als isoliertes Ersatzteil zum Festlegen einer Haltevorrichtung der hier beschriebenen Art bereitgestellt werden. Das Werkzeug könnte ein Greifende mit einem einseitig offenen Schlitz umfassen, in welchen der Zugkörper einschiebbar ist, und ein Adapterende. Das Adapterende könnte als Vierkant, Sechskant oder in anderer Weise ausgebildet sein. Das Werkzeug könnte stiftförmig ausgebildet sein, damit der Zugkörper um das Werkzeug herumgewickelt werden kann. Das Adapterende des Stifts ist derart ausgebildet, dass es leicht von einem Futter eines Akkuschraubers, einer Bohrmaschine oder eines Schlüssels zum Drehen oder Rotieren ergriffen werden kann.

Die hier beschriebene Haltevorrichtung ist insbesondere zur Verwendung bei dynamisch belasteten Rohrverbindungen geeignet. Die Haltevorrichtung ist bevorzugt flexibel biegbar und aus Metall gefertigt.

In der Zeichnung zeigen
- Fig. 1: eine perspektivische Ansicht einer nicht erfindungsgemäßen Haltevorrichtung zum Befestigen einer Isolierung, wobei die Haltevorrichtung noch nicht endgültig geschlossen ist, jedoch der Zugkörper zur provisorischen Verbindung der Verschlusselemente bereits durch die Ausnehmung eines zweiten Verschlusselements gezogen ist, welches als Haube ausgestaltet ist,
- Fig. 2: eine weitere perspektivische Ansicht der Haltevorrichtung gemäß Fig. 1, wobei eine Ansicht auf die Innenfläche des Zugkörpers dargestellt ist,
- Fig. 3: eine Seitenansicht der Haltevorrichtung gemäß Fig. 1 und 2,
- Fig. 4: eine Ansicht der Haltevorrichtung gemäß Fig. 1, wobei die Haltevorrichtung betriebstauglich geschlossen und der Zugkörper spiralförmig aufgewickelt ist,
- Fig. 5: auf der linken Seite eine Seitenansicht der Haltevorrichtung gemäß Fig. 1 in aufgerolltem Zustand und in einer Ebene liegend und auf der rechten Seite die schlitzförmige Ausnehmung des zweiten Verschlusselements in einer Draufsicht,
- Fig. 6: eine Ansicht der Haltevorrichtung gemäß Fig. 5 von unten,
- Fig. 7: eine Ansicht eines Rohlings, aus welchem die Haltevorrichtung gemäß Fig. 1 gefertigt wird,
- Fig. 8: auf der linken Seite ein Werkzeug zum Aufwickeln des Zugkörpers und auf der rechten Seite eine schematische Darstellung einer Anordnung, welche zwei Rohrenden umfasst, die durch eine V-Band-Schelle miteinander gasdicht verbunden sind, wobei die V-Band-Schelle von einer Isolierung umgeben ist, welche in einer Haltevorrichtung gemäß Fig. 4 aufgenommen ist, und wobei die Haltevorrichtung die V-Band-Schelle und die Isolierung sowohl in radialer als auch in axialer Richtung nach Art eines Außenmantels umfängt,
- Fig. 9: eine perspektivische Ansicht einer weiteren Haltevorrichtung zum Befestigen einer Isolierung, wobei die Haltevorrichtung geschlossen ist und eine Schraubverbindung zum Verringern des Außen- und Innenumfangs aufweist und wobei das zweite Verschlusselement als Haube ausgestaltet ist,
- Fig. 10: eine perspektivische Ansicht der erfindungsgemäßen Haltevorrichtung, welche eine verschwenk- und einhängbare Schraube aufweist,
- Fig. 11: eine Seitenansicht der Haltevorrichtung gemäß Fig. 10,
- Fig. 12: eine Ansicht der Haltevorrichtung gemäß Fig. 10 und 11, wobei die Schraubverbindung dargestellt ist,
- Fig. 13: eine weitere Ansicht der Haltevorrichtung gemäß Fig. 12,
- Fig. 14: eine Seitenansicht der aufgerollten und nicht geschlossenen Haltevorrichtung gemäß Fig. 10 und
- Fig. 15: eine Schnittansicht einer zwischen den Seitenstegen eingelegten Isolierung.

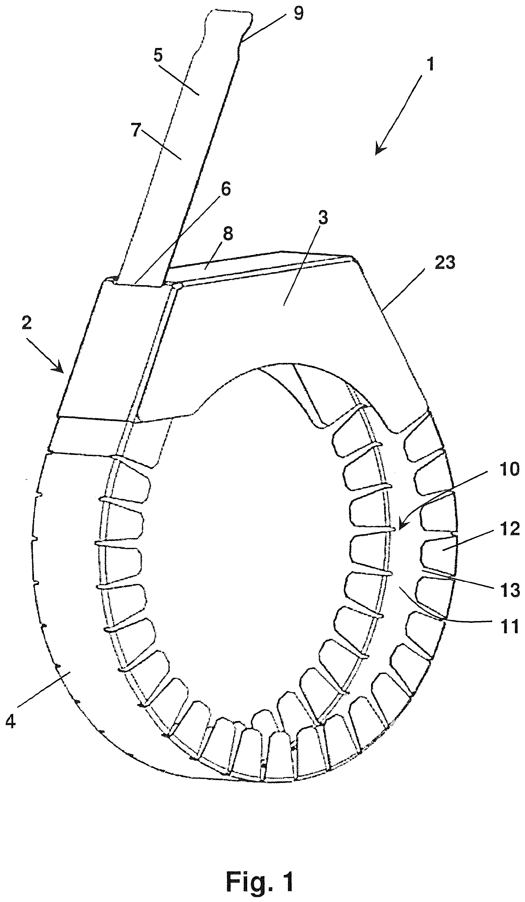

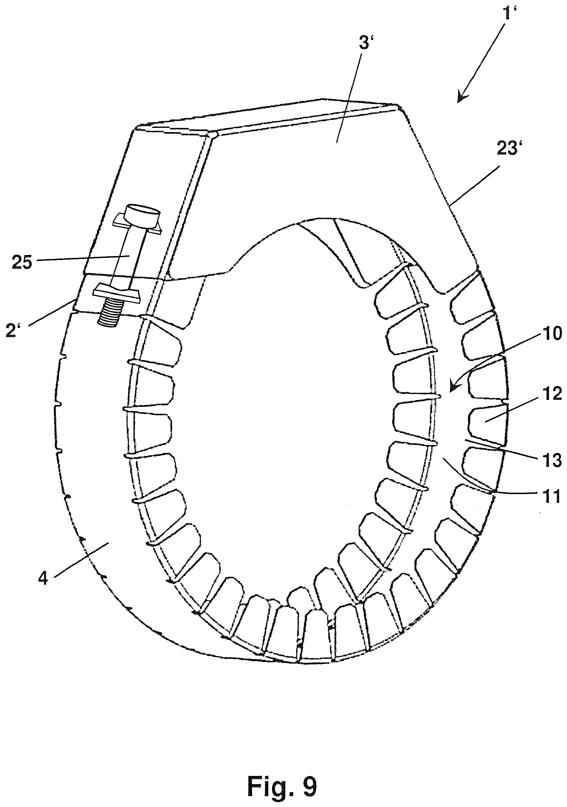

Die Fig. 1 und 9 zeigen jeweils eine Haltevorrichtung 1, 1' zum Befestigen einer Isolierung an einer V-Band-Schelle oder an einer anderen Verbindungsvorrichtung für zu verbindende Rohrenden, umfassend Verschlusselemente 2, 2', 3, 3', wobei durch Zusammenwirken der Verschlusselemente 2, 2', 3, 3' der Außen- und/ oder Innenumfang der Haltevorrichtung 1, 1' verringerbar ist. Beide Haltevorrichtungen 1, 1' umfassen einen biegbaren Gürtelabschnitt 4, der als Teil eines Außenmantels oder nach Art eines Außenmantels um eine Isolierung legbar ist. Der Gürtelabschnitt 4 ist mittelbar oder unmittelbar mit einer Haube 23, 23' zur Aufnahme eines Überstands oder Verschlusses einer V-Band-Schelle oder einer anderen Verbindungsvorrichtung für Rohrenden verbunden und/ oder verbindbar.

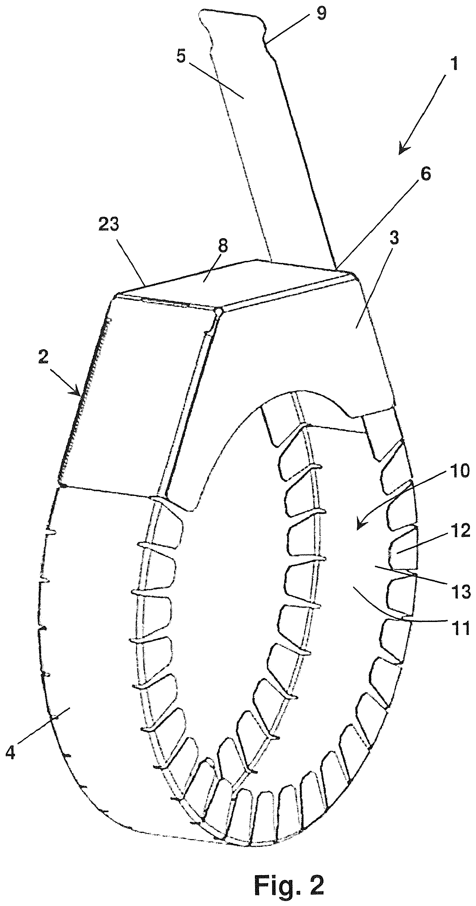

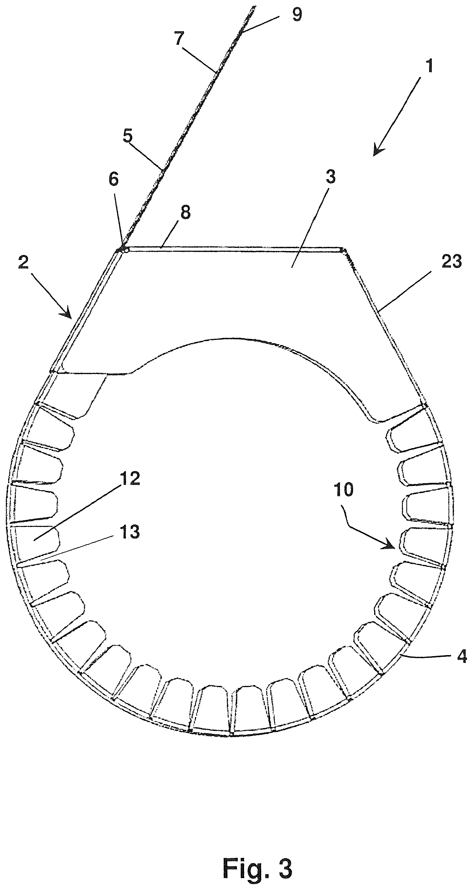

Die Fig. 1 bis 6 zeigen eine Haltevorrichtung 1, bei welcher die beiden Verschlusselemente 2, 3 miteinander verbindbar oder verbunden sind, wobei das erste Verschlusselement 2 einen Zugkörper 5 aufweist oder als solcher ausgebildet ist, wobei das zweite Verschlusselement 3 eine Ausnehmung 6 aufweist, durch welche der Zugkörper 5 zur Verringerung des Außen- und/ oder Innenumfangs der Haltevorrichtung 1 durchziehbar oder durchgezogen ist, und wobei der Zugkörper 5 aufwickelbar oder aufgewickelt ist und beim Aufwickeln oder im aufgewickelten Zustand an einem Widerlager 8 anliegt. Das zweite Verschlusselement 3 ist als Haube 23 ausgebildet, wobei in der Haube 23 die Ausnehmung 6 ausgebildet ist.

Die Fig. 1 bis 4 zeigen konkret eine Haltevorrichtung 1 zum Befestigen einer nicht gezeigten Isolierung, umfassend ein erstes Ende, dem ein erstes Verschlusselement 2 zugeordnet ist, ein zweites Ende, dem ein zweites Verschlusselement 3 zugeordnet ist, und einen biegbaren Gürtelabschnitt 4, welcher sich zwischen den Verschlusselementen 2, 3 erstreckt, wobei die beiden Enden durch ein Zusammenwirken der Verschlusselemente 2, 3 miteinander verbindbar oder verbunden sind, wobei das erste Verschlusselement 2 einen Zugkörper 5 aufweist und wobei das zweite Verschlusselement 3 eine Ausnehmung 6 aufweist, durch welche der Zugkörper 5 durchziehbar oder durchgezogen ist.

Die Fig. 1 bis 3 zeigen, dass der Zugkörper 5 aufwickelbar ist und seine Außenfläche 7 beim Aufwickeln an einem Widerlager 8 des zweiten Verschlusselements 3 anliegt. Insoweit ist der Zugkörper 5 aufwickelbar und liegt beim Aufwickeln an dem Widerlager 8 an und stützt sich an diesem ab.

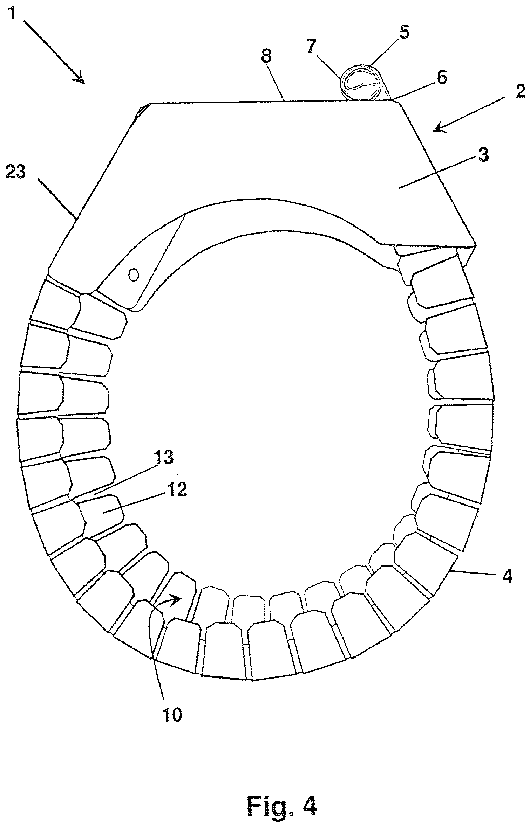

Fig. 4 zeigt, dass der Zugkörper 5 aufgewickelt ist und seine Außenfläche 7 im aufgewickelten Zustand an einem Widerlager 8 des zweiten Verschlusselements 3 anliegt. Insoweit ist der Zugkörper 5 aufgewickelt und liegt im aufgewickelten Zustand an dem Widerlager 8 an und stützt sich an diesem ab. Fig. 4 zeigt konkret, dass der Zugkörper 5 spiralförmig aufgewickelt ist.

Der Zugkörper 5 gemäß Fig. 1 bis 3 ist händisch oder mittels eines Akkuschraubers spiralförmig aufwickelbar und in den in Fig. 4 gezeigten Zustand verbringbar. Hierfür ist der Zugkörper 5 als länglicher Streifen oder längliche Zunge oder streifenartig oder zungenartig ausgebildet. An seinem freien Ende weist er eine Einschnürung 9 auf, die ein leichtes Ergreifen und Umbiegen bzw. Aufwickeln durch ein Werkzeug erlaubt. Der Zugkörper 5 und das Material, aus dem der Gürtelabschnitt 4 und die gesamte Haltevorrichtung 1 gefertigt sind, weisen eine Dicke von 0,5 mm auf.

Die Fig. 1 bis 5 zeigen, dass der Gürtelabschnitt 4 eine Aufnahme 10 zum Ein- oder Anlegen einer Isolierung aufweist und diese Aufnahme 10 ausbildet. Der Gürtelabschnitt 4 weist hierfür eine innere Anlagebasis 11 auf, von welcher beidseitig Stützsegmente 12 abragen, welche durch Aussparungen 13 voneinander beabstandet sind. Mindestens zwei Stützsegmente 12 verjüngen sich in Abragerichtung in ihrer Breite, wobei sich eine zwischen diesen liegende Aussparung 13 in Abragerichtung derart erweitert, dass sich die Stützsegmente 12 beim Biegen des Gürtelabschnitts 4 zur Verringerung des Außen- und/ oder Innenumfangs mit ihren Seitenkanten einander annähern können und sich die Aussparung 13 dabei in ihrer Weite verringert.

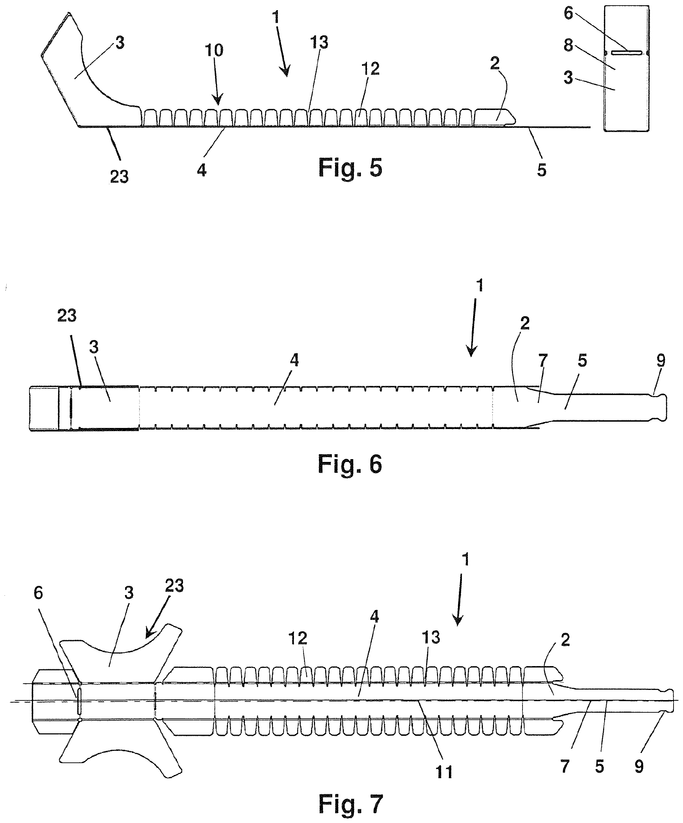

Die Stützsegmente 12 sind voneinander durch die Aussparungen 13 beabstandet. Die Stützsegmente 12 ragen von der Anlagebasis 11 ab, wobei sie mit dieser jeweils einen Winkel von 80 bis 100° einschließen. Dies ist in Fig. 5 besonders deutlich dargestellt. Mehrere benachbarte Stützsegmente 12 sind jeweils an gegenüberliegenden Längsseiten der Anlagebasis 11 palisadenartig angeordnet. Zwischen zwei benachbarten Stützsegmenten 12 ist jeweils eine Aussparung 13 in Form eines einseitig offenen, sich V-förmig erweiternden Schlitzes ausgebildet. Die Aussparungen 13 können durch Stanzprozesse oder einen Laser eingebracht werden.

Fig. 7 zeigt, dass die Haltevorrichtung 1 einstückig aus einer metallischen Lage ausgebildet ist. Die metallische Lage besteht aus Edelstahl. Die metallische Lage weist eine Dicke von 0,5 mm auf. Die in Fig. 7 links gezeigten abragenden Seitenelemente können aufgrund einer durchgängigen Kantung gebogen und durch Nietverbindungen zum zweiten Verschlusselement 3 bzw. zur Haube 23 verbunden werden. Die Stützsegmente 12 können ebenfalls aufgrund der Kantung zur Ausbildung einer Aufnahme 10 umgebogen werden. Das erste Verschlusselement 2 und der Zugkörper 5 sind einstückig ausgebildet und gehen ineinander über. Der Zugkörper 5 mündet in das erste Verschlusselement 2, indem sich die Breite des Zugkörpers 5 vergrößert. Hierdurch kann der Zugkörper 5 nur mit einer gewissen Länge durch die Ausnehmung 6 gezogen werden.

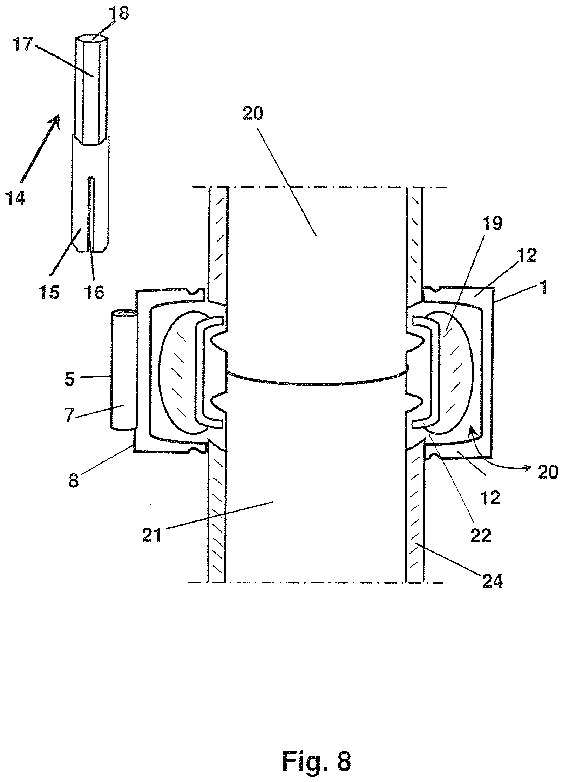

Fig. 8 zeigt in der linken Ansicht ein rotierbares stiftförmiges Werkzeug 14 zum Festlegen der Haltevorrichtung 1. Das Werkzeug 14 umfasst ein Greifende 15 mit einem einseitig offenen Schlitz 16, in welchen der Zugkörper 5 einschiebbar ist, und ein Adapterende 17, welches als Sechskant 18 ausgebildet ist. Das Greifende 15 dient dem Ergreifen und Aufwickeln des Zugkörpers 5. Das Adapterende 17 ist mit einem dreh- oder rotierbaren Futter verbindbar. Hierfür ist das Adapterende 17 mit einem Sechskant 18 versehen. Es ist jedoch auch denkbar, dass das Adapterende 17 anders ausgebildet ist, um gut von einem Werkzeug ergriffen werden zu können.

Mit dem zuvor beschriebenen Werkzeug 14 ist ein Verfahren zum Befestigen einer Isolierung 19 mittels der Haltevorrichtung 1 durchführbar, wobei das erste Ende der Haltevorrichtung 1, dem das erste Verschlusselement 2 zugeordnet ist, und das zweite Ende der Haltevorrichtung 1, dem das zweite Verschlusselement 3 zugeordnet ist, miteinander verbunden werden, wobei der Gürtelabschnitt 4, welcher sich zwischen den Verschlusselementen 2, 3 erstreckt, gebogen wird, wobei die beiden Enden durch ein Zusammenwirken der Verschlusselemente 2, 3 verbunden werden, indem der Zugkörper 5 des ersten Verschlusselements 2 durch die Ausnehmung 6 des zweiten Verschlusselements 3 gezogen wird, wobei der Zugkörper 5 zur Verringerung des Außen- und Innenumfangs der Haltevorrichtung 1 und zu deren Festlegung aufgewickelt wird und wobei seine Außenfläche 7 beim Aufwickeln oder im aufgewickelten Zustand an einem Widerlager 8 des zweiten Verschlusselements 3 anliegt. Das Aufwickeln erfolgt durch Drehen des Werkzeugs 14, dessen Schlitz 16 mit dem Zugkörper 5 in Eingriff ist.

Fig. 8 zeigt auf der rechten Seite in schematischer Ansicht eine Anordnung, umfassend zwei Rohrenden 20, 21, welche durch eine V-Band-Schelle 22 miteinander gasdicht und fest verbunden sind, wobei die V-Band-Schelle 22 von einer Isolierung 19 umfangen wird und wobei die Isolierung 19 in der Aufnahme 10 der Haltevorrichtung 1 aufgenommen ist. Die Haltevorrichtung 1 presst die Isolierung 19 radial gegen die V-Band-Schelle 22 und umfängt sowohl die V-Band-Schelle 22 als auch die Isolierung 19 in radialer und axialer Richtung nach Art eines Außenmantels. Die Isolierung 19 und die V-Band-Schelle 22 werden hierdurch vor Steinschlag geschützt, wenn die Anordnung beispielsweise an einem Unterboden eines Kraftfahrzeugs angeordnet ist.

Die Rohrenden 20, 21 sind jeweils zusätzlich noch durch einen Isoliermantel 24 isoliert, der jeweils innerhalb der Haltevorrichtung 1 endet, um eine nahezu vollständige Isoliertheit herzustellen. Die Isolierung 19 ist zumindest an einer Stelle mit der Haltevorrichtung 1 verbunden. Die Isolierung 19 ist am zweiten Verschlusselement 3 festgelegt.

Bei der hier konkret gezeigten Haltevorrichtung 1 ist nur ein Zugkörper 5 vorgesehen. Durch Aufwickeln eines einzigen Zugkörpers 5 kann die Montage schnell durchgeführt werden. Die Ausnehmung 6 im zweiten Verschlusselement 3 ist als an vier Seiten umgebener Schlitz ausgebildet. So kann der Zugkörper 5 nicht seitlich ausweichen. Der Schlitz bzw. die Ausnehmung 6 ist länglich ausgebildet. Der Schlitz bzw. die Ausnehmung 6 ist so schmal, dass der Zugkörper 5 mit geringem Spiel hindurchführbar ist. Hierdurch kann der Zugkörper 5 nicht mehr durch den Schlitz bzw. die Ausnehmung 6 zurückgleiten, auch wenn er nur geringfügig, das heißt mit nur wenigen Wicklungen, aufgewickelt ist.

Fig. 9 zeigt eine Haltevorrichtung 1', bei der kein Zugkörper, sondern eine Schraube 25 verwendet wird, um die Verschlusselemente 2', 3' miteinander zu verbinden. Das zweite Verschlusselement 3' ist als Haube 23' ausgebildet.

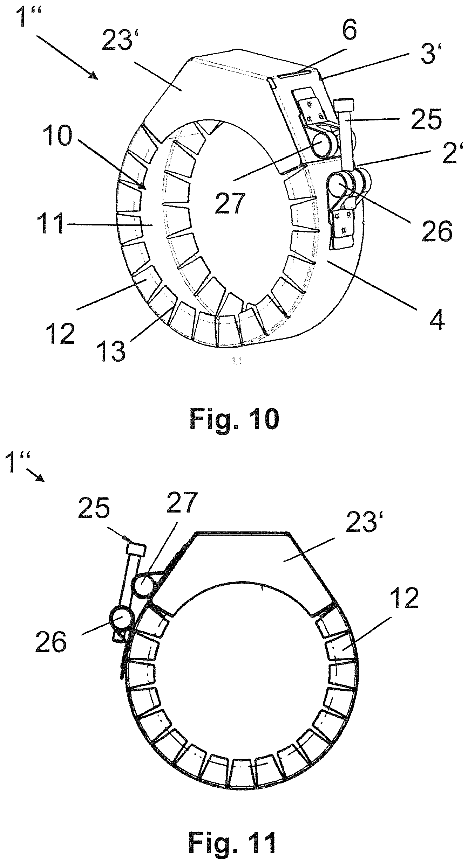

Fig. 10 bis 14 zeigen die erfindungsgemäße Haltevorrichtung 1", bei welcher die beiden Verschlusselemente 2', 3' durch eine Schraubverbindung miteinander verbunden sind.

Eine Schraube 25 ist mit einem gewindetragenden Schraubenende in einer Schrauben-Gegenaufnahme 26 aufgenommen, und die Schraube 25 ist zur Verringerung des Außen- und/ oder Innenumfangs der Haltevorrichtung 1" in die Schrauben-Gegenaufnahme 26 eindrehbar.

Die Schraube 25 ist mit ihrem gewindetragenden Schraubenende in einer drehbaren Schrauben-Gegenaufnahme 26 aufgenommen und verschwenkbar.

Die Schraube 25 ist mit einem freien Ende, welches einen Schraubenkopf aufweist, in ein Einhängelager 27 einhängbar. Nach dem Einhängen kann durch Eindrehen der Schraube 25 in die Schrauben-Gegenaufnahme 26 die Haltevorrichtung 1" gegen radial innenliegende Elemente angedrückt werden.

Die drehbare Schrauben-Gegenaufnahme 26 ist dem Gürtelabschnitt 4 zugeordnet, nämlich an diesem festgelegt. Das Einhängelager 27 ist der Haube 23' zugeordnet, nämlich an dieser festgelegt.

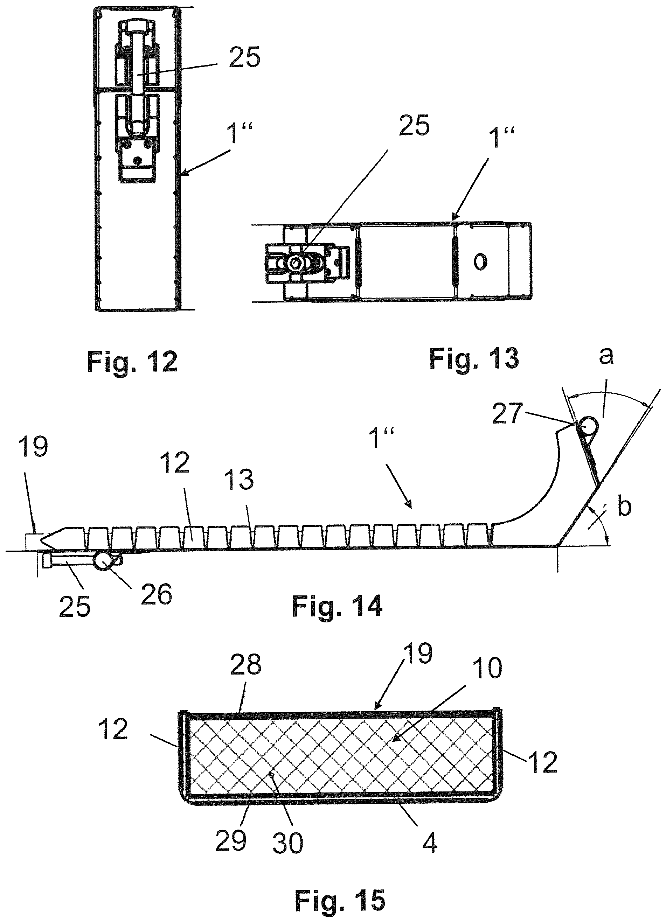

Fig. 14 zeigt die Haltevorrichtung 1" in aufgerolltem Zustand mit eingelegter Isolierung 19. Es sind mit Bezug auf Flächenneigungen der Haube 23' zwei Winkel a und b von jeweils 55° gezeigt.

Fig. 15 zeigt, dass die Isolierung 19 eine Laminierung 28 aufweist, welche der Anlagebasis 11 abgewandt und nach radial innen angeordnet ist. Die Laminierung 28 ist auf einem Isoliermaterial 30 aufgebracht. Die Isolierung 19 ist bereichsweise durch einen Klebstoff 29 mit der Haltevorrichtung 1" verbunden.

Die Haltevorrichtung 1" weist in ihrer Haube 23' eine Ausnehmung 6 auf, durch die ein Zugkörper 5 ziehbar wäre. Insoweit ist eine Kombination aus einer Schraubverbindung und einer Verbindung mittels des hier beschriebenen Zugkörpers 5 denkbar.

### Bezugszeichen

- 1, 1', 1": Haltevorrichtung
- 2, 2': erstes Verschlusselement
- 3, 3': zweites Verschlusselement
- 4: Gürtelabschnitt
- 5: Zugkörper
- 6: Ausnehmung
- 7: Außenfläche
- 8: Widerlager
- 9: Einschnürung
- 10: Aufnahme
- 11: Anlagebasis
- 12: Stützsegment
- 13: Aussparung
- 14: Werkzeug
- 15: Greifende
- 16: Schlitz
- 17: Adapterende
- 18: Sechskant
- 19: Isolierung
- 20, 21: Rohrende
- 22: V-Band-Schelle
- 23, 23`: Haube
- 24: Isoliermantel
- 25: Schraube
- 26: Schrauben-Gegenaufnahme
- 27: Einhängelager
- 28: Laminierung
- 29: Klebstoff
- 30: Isoliermaterial

## Patentansprüche

1. Haltevorrichtung (1") zum Befestigen einer Isolierung (19) an einer V-Band-Schelle (22) oder an einer anderen Verbindungsvorrichtung für zu verbindende Rohrenden (20, 21), umfassend Verschlusselemente (2', 3'), wobei durch Zusammenwirken der Verschlusselemente (2', 3') der Außen- und/ oder Innenumfang der Haltevorrichtung (1") verringerbar ist, und umfassend einen biegbaren Gürtelabschnitt (4), wobei der Gürtelabschnitt (4) als Teil eines Außenmantels oder nach Art eines Außenmantels um eine Isolierung (19) legbar ist, wobei der Gürtelabschnitt (4) mittelbar oder unmittelbar mit einer Haube (23') zur Aufnahme eines Überstands oder Verschlusses einer V-Band-Schelle (22) oder einer anderen Verbindungsvorrichtung für Rohrenden (20, 21) verbunden ist,
**dadurch gekennzeichnet, dass**
die beiden Verschlusselemente (2', 3') durch eine Schraubverbindung miteinander verbunden sind, wobei eine Schraube (25) mit einem gewindetragenden Schraubenende in einer Schrauben-Gegenaufnahme (26) aufgenommen ist und die Schraube (25) zur Verringerung des Außen- und/ oder Innenumfangs der Haltevorrichtung (1") in die Schrauben-Gegenaufnahme (26) eindrehbar ist, wobei die Schraube (25) mit ihrem Schraubenende in der drehbaren Schrauben-Gegenaufnahme (26) aufgenommen oder verschwenkbar aufgenommen ist und mit einem freien Ende, welches einen Schraubenkopf aufweist, in ein Einhängelager (27) eingehängt ist, wobei die drehbare Schrauben-Gegenaufnahme (26) dem Gürtelabschnitt (4) zugeordnet ist und wobei das Einhängelager (27) der Haube (23') zugeordnet ist.

2. Haltevorrichtung nach Anspruch 1, **dadurch gekennzeichnet, dass** der Gürtelabschnitt (4) eine Aufnahme (10) zum Ein- oder Anlegen einer Isolierung (19) aufweist oder ausbildet, wobei der Gürtelabschnitt (4) eine innere Anlagebasis (11) aufweist, von welcher beidseitig Stützsegmente (12) abragen, welche durch Aussparungen (13) voneinander beabstandet sind.

3. Haltevorrichtung nach Anspruch 2, **dadurch gekennzeichnet, dass** mindestens zwei Stützsegmente (12) sich in Abragerichtung in ihrer Breite verjüngen, wobei sich eine zwischen diesen liegende Aussparung (13) in Abragerichtung derart erweitert, dass sich die Stützsegmente (12) beim Biegen des Gürtelabschnitts (4) zur Verringerung des Außen- und/ oder Innenumfangs mit ihren Seitenkanten einander annähern können und sich die Aussparung (13) dabei in ihrer Weite verringert.

4. Haltevorrichtung nach einem der voranstehenden Ansprüche, **dadurch gekennzeichnet, dass** eine Isolierung (19) zumindest an einer Stelle mit der Haltevorrichtung (1") verbunden ist und/ oder dass eine Isolierung (19) am zweiten Verschlusselement (3') festgelegt ist.

5. Haltevorrichtung nach einem der voranstehenden Ansprüche, **dadurch gekennzeichnet, dass** die Isolierung (19) eine Laminierung (28) aufweist, welche der Anlagebasis (11) abgewandt und/ oder nach radial innen angeordnet ist.

6. Haltevorrichtung nach einem der voranstehenden Ansprüche, **dadurch gekennzeichnet, dass** die Isolierung (19) bereichsweise durch einen Klebstoff (29) mit der Haltevorrichtung (1") verbunden ist.

7. Haltevorrichtung nach einem der voranstehenden Ansprüche, **dadurch gekennzeichnet, dass** die Haube (23') eine Ausnehmung (6) aufweist, durch die ein Zugkörper (5) ziehbar ist.

## Claims

1. Holding device (1") for fastening an insulation (19) to a V-band clamp (22) or to another connecting device for pipe ends (20, 21) to be connected, comprising fastener elements (2', 3'), it being possible for the outer and/or inner circumference of the holding device (1") to be decreased by way of interaction of the fastener elements (2', 3'), and comprising a flexible belt portion (4), it being possible for the belt portion (4) to be laid as part of an outer shell or in the manner of an outer shell around an insulation (19), the belt portion (4) being connected indirectly or directly to a cover (23') for receiving a protrusion or fastener of a V-band clamp (22) or another connecting device for pipe ends (20, 21), **characterized in that** the two fastener elements (2', 3') are connected to one another by way of a screw connection, a screw (25) being received by way of a thread-bearing screw end in a screw counter-receptacle (26), and it being possible for the screw (25) to be screwed into the screw counter-receptacle (26) in order to decrease the outer and/or inner circumference of the holding device (1"), the screw (25) being received or being received pivotably by way of its screw end in the rotatable screw counter-receptacle (26), and being hooked by way of a free end which has a screw head into a hook-in bearing (27), the rotatable screw counter-receptacle (26) being assigned to the belt portion (4), and the hook-in bearing (27) being assigned to the cover (23').

2. Holding device according to Claim 1, **characterized in that** the belt portion (4) has or configures a receptacle (10) for inserting or applying an insulation (19), the belt portion (4) having an inner contact base (11), from which supporting segments (12) protrude on both sides which are spaced apart from one another by recesses (13).

3. Holding device according to Claim 2, **characterized in that** the width of at least two supporting segments (12) tapers in the protruding direction, a recess (13) which lies between them widening in the protruding direction in such a way that the supporting segments (12) can move closer to one another with their side edges in the case of bending of the belt portion (4) in order to decrease the outer and/or inner circumference, and the width of the recess (13) decreasing in the process.

4. Holding device according to one of the preceding claims, **characterized in that** an insulation (19) is connected at least at one point to the holding device (1''), and/or **in that** an insulation (19) is fixed on the second fastener element (3').

5. Holding device according to one of the preceding claims, **characterized in that** the insulation (19) has a lamination (28) which is arranged radially on the inside and/or so as to face away from the contact base (11).

6. Holding device according to one of the preceding claims, **characterized in that** the insulation (19) is connected in regions to the holding device (1") by way of an adhesive (29).

7. Holding device according to one of the preceding claims, **characterized in that** the cover (23') has a cutout (6), through which a tensile member (5) can be pulled.

## Revendications

1. Dispositif de retenue (1") permettant de fixer une isolation (19) à un collier de serrage en V (22) ou à un autre dispositif de liaison pour des extrémités de tuyau (20, 21) à relier, comprenant des éléments de fermeture (2', 3'), dans lequel une action conjointe des éléments de fermeture (2', 3') permet de réduire la circonférence extérieure et/ou intérieure du dispositif de retenue (1"), et comprenant une section de ceinture flexible (4), la section de ceinture (4) pouvant être placée autour d'une isolation (19) en tant que partie d'une gaine extérieure ou à la manière d'une gaine extérieure, dans lequel la section de ceinture (4) est reliée indirectement ou directement à une calotte (23') pour recevoir une saillie ou une fermeture d'un collier de serrage en V (22) ou d'un autre dispositif de liaison pour des extrémités de tuyau (20, 21),
**caractérisé en ce que** les deux éléments de fermeture (2', 3') sont reliés l'un à l'autre par un assemblage vissé, dans lequel une vis (25) est logée par une extrémité de vis filetée dans un logement de vis opposé (26), et la vis (25) peut être vissée dans le logement de vis opposé (26) pour réduire la circonférence extérieure et/ou intérieure du dispositif de retenue (1"), dans lequel la vis (25) est logée par son extrémité de vis dans le logement de vis opposé (26) rotatif ou est logée en pivotement, et est accrochée par une extrémité libre présentant une tête de vis dans un support d'accrochage (27), dans lequel le logement de vis opposé (26) rotatif est associé à la section de ceinture (4), et dans lequel le support d'accrochage (27) est associé à la calotte (23').

2. Dispositif de retenue selon la revendication 1, **caractérisé en ce que** la section de ceinture (4) présente ou réalise un logement (10) pour insérer ou appliquer une isolation (19), dans lequel la section de ceinture (4) présente une base d'appui intérieure (11) à partir de laquelle des segments de soutien (12) qui sont espacés les uns des autres par des évidements (13) font saillie des deux côtés.

3. Dispositif de retenue selon la revendication 2, **caractérisé en ce qu'**au moins deux segments de soutien (12) diminuent en largeur dans la direction de saillie, dans lequel un évidement (13) situé entre ceux-ci s'élargit dans la direction de saillie de telle sorte que les segments de soutien (12) lors de la flexion de la section de ceinture (4) peuvent se rapprocher les uns des autres par leurs bords latéraux pour réduire la circonférence extérieure et/ou intérieure, et l'évidement (13) diminue alors en largeur.

4. Dispositif de retenue selon l'une quelconque des revendications précédentes, **caractérisé en ce qu'**une isolation (19) est reliée au moins en un endroit au dispositif de retenue (1"), et/ou **en ce qu'**une isolation (19) est immobilisée au niveau du deuxième élément de fermeture (3').

5. Dispositif de retenue selon l'une quelconque des revendications précédentes, **caractérisé en ce que** l'isolation (19) présente un laminage (28) qui est détourné de la base d'appui (11) et/ou est disposé radialement à l'intérieur.

6. Dispositif de retenue selon l'une quelconque des revendications précédentes, **caractérisé en ce que** l'isolation (19) est reliée par endroits au dispositif de retenue (1") par un adhésif (29).

7. Dispositif de retenue selon l'une quelconque des revendications précédentes, **caractérisé en ce que** la calotte (23') présente un creux (6) à travers lequel on peut tirer un corps de traction (5).
